# EUROPEAN PATENT APPLICATION

(11) **EP 4 080 259 A1**
(43) Date of publication of application: **26.10.2022**
(21) Application number: 20903712.6
(22) Date of filing: 18.12.2020
(51) Int. Cl.: G02B 6/44

(54) **OPTICAL TERMINAL BOX FOR INDOOR USE**

(30) Priority: 20.12.2019 BR 202019027557 U
(71) Applicant: Furukawa Electric Latam S.A., 81460-120 Curitiba - PR (BR)
(72) Inventor: CHUNG, Nicolas, 81210-000 Curitiba - PR (BR)
(74) Representative: Clarke Modet & Co.
(86) International application number: PCT/BR2020/050564
(87) International publication number: WO 2021/119790

(57) **Abstract**

The box houses and holds a connection terminal (CT), to which an end connector (EC) of a "drop" cable (DC) and an end plug (EP) of a user's optical cord (OC) are coupled, and comprises a base (10) having a front face (10a) incorporating: next to a first end edge (11), a jaw (20) provided with teeth (22), receiving and retaining an extension of the "drop" cable (DC); in a median region, a pair of lateral jaws (30) for locking the connection terminal (CT); and, next to a second end edge (12), a stop (18) having a median window (18a) for the passage of the optical cord (OC). The box further comprises a cover (60), having a front wall (61), end walls (62) provided with windows (62a) that surround, respectively, a portion of the jaw (20) and the median window (18a) of the stop (18), and longitudinal walls (63), lockable against the front face (10a) of the base (10).

## Description

### Field of the Innovation

The present innovation, in the nature of a utility model, refers to a termination box in the form of a compact, low cost, robust and versatile optical rosette, to define a termination point in an indoor environment of an optical telecommunication network of the FTTx type, allowing the connection between a "drop" cable with an optical cord of an optical network terminal or modem, placed on the premises of a user.

### Backgrounds of the innovation

The termination box or optical rosette of the present innovation is of the type usually attached to a wall or other support structure, inside a user's premises, to receive a "drop" cable incorporating a respective end-to-end connector to be coupled inside the termination box, to a connection terminal constructed to receive the fitting of the end plug of an optical cord from the network terminal or modem of the optical network user.

Despite being normally used, the well-known optical termination boxes, known as optical rosettes, have a tray-shaped base, with dimensions designed to receive and retain, by winding inside the same, an extension of one or more "drop" cables of a certain dimensional pattern, the end of each "drop" cable being provided with a respective set of connector and terminal housed inside the base, which is previously closed by a cover with dimensions compatible with those of the base in tray.

The type of construction mentioned above leads to termination boxes or optical rosettes that are not very compact, of relatively complex and expensive construction, due to the internal elements of the base, necessary for accommodation and retention of the "drop" cable extension(s).

In addition to the drawbacks mentioned above, these well-known rosettes require more time-consuming and careful operations for accommodation and retention of the "drop" cable extension(s) inside the base-tray, and require a specific positioning in the assembly of the cover against the base, requiring that the attachment of the latter to the wall or supporting structure is also made in a specific condition to prevent the cover, when assembled, from being upside down.

Another deficiency of these well-known optical rosettes results from the fact that they have their base in a tray designed according to the type of "drop" cable to have an extension accommodated and retained inside the tray, which limits the versatility of application of these optical rosettes to different "drop" cable standards and gauges.

An example of a termination box of the type considered herein can be found in the Brazilian patent document P11107334-9 A2.

In order to eliminate the abovementioned deficiencies, the applicant has developed the termination box, object of patent application BR 20 2018 067293-8 and which comprises a base having a front face that incorporates a jaw, to receive and retain an extension of a "drop" cable, and a pair of lateral jaws to releasably lock against the front face of the base, a connection terminal in which, on the one hand, there are fitted an end connector incorporated into the "drop" cable and, on the other hand, an end plug of a user terminal optical cord. The box further comprises a cover to be seated and locked, in a difficultly releasable way without the use of tools or damaging the product, against the front face of the base and having a front wall, opposite longitudinal walls and end walls each provided with a window enclosing a portion of the jaw and the connection terminal, respectively.

Despite presenting a simple and compact construction, with relatively small dimensions and low cost, the termination box, object of the said previous patent application of the applicant, has the base and cover constructed in order to maintain the terminal of connection projecting, to a greater or lesser extent, outwards the box, through the respective end window of the cover, allowing the end plug of the optical cord and its fitting in the connection terminal to take place outside the termination box.

With this previous construction, the coupling of the end plug on the connection terminal is exposed, in an unprotected way, on the outside of the termination box, allowing an easy disconnection of the end plug from the optical cord, by involuntary shocks or improper handling of the plug itself.

### Summary of the innovation

In view of the aspects discussed above, the present innovation aims at providing a termination box or optical rosette presenting not only the practical effects, in economic and functional terms, of the previous termination box, but a modified construction to allow the end connector of the "drop" cable, the connection terminal and the end plug of the optical cord to remain housed and locked inside the box, requiring the opening of the cover in order to gain access to said components, particularly the end plug.

The new construction proposed herein also allows an easy and safe axial retention of different "drop" cable standards and gauges, to define a user termination point in an indoor environment of an optical telecommunication network, and further a positioning end suitable for the cover, even in case the base is attached to its supporting structure in an inverted position.

### Brief description of the drawings

Next, the innovation will be described based on the attached drawings, given as an example of an embodiment of the invention and in which:

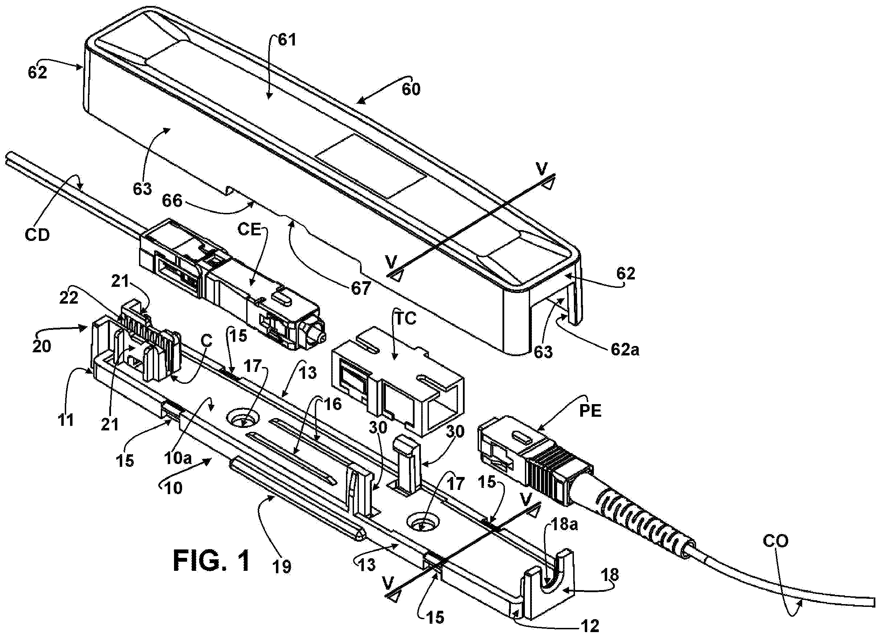

Figure 1 represents an exploded perspective view of the termination box or optical rosette in question, illustrating the base, the cover and further a "drop" cable extension provided with an end connector, an optical cord extension provided with an end plug and a connection terminal to be housed inside the rosette, to define the coupling element between the end connector and the end plug;

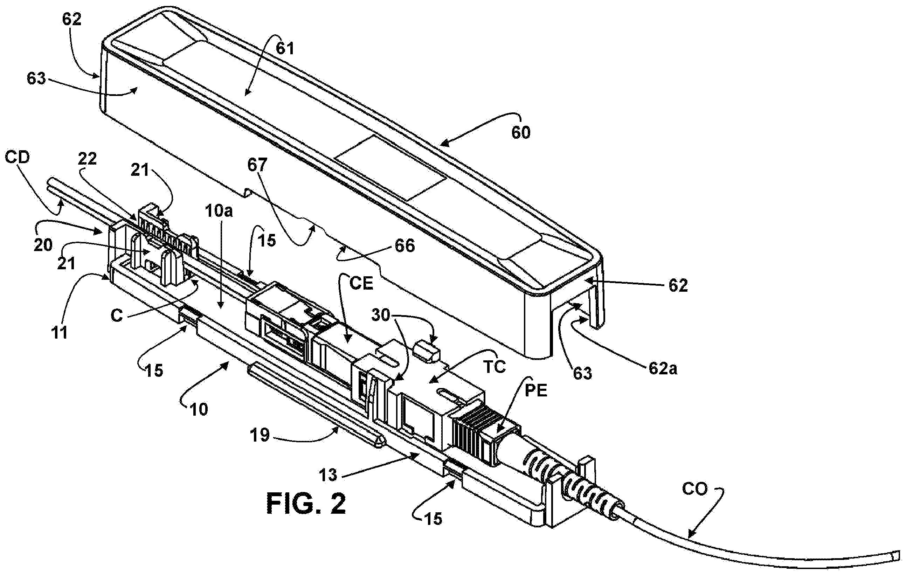

Figure 2 represents an exploded perspective view of the base and cover of the box of figure 1, but illustrating the connection terminal, the "drop" cable extension with its end connector and the optical cord plug coupled together and integrally mounted on the base of the box;
Figure 3 represents a perspective view of the termination box of figures 1 and 2, with the cover mounted on the base and integrally covering the end connector of the "drop" cable, the connection terminal and the end plug of the optical cord;
Figure 4 represents a top plan view of the base, in enlarged scale to better illustrate the construction of the axial retention jaw of the "drop" cable and the identical shape of the opposite end edges of the base of the termination box; and
Figure 5 represents a cross-sectional view of the box, taken along the lines V-V in figure 1, illustrating the interaction of the retention elements between the cover and the base of the termination box.

### Description of the innovation

As illustrated in the drawings and mentioned above, the termination box or optical rosette in question is used to house and retain a connection terminal CT to which a terminal connector EC of a "drop" cable (DC) and an end plug EP of an optical cord OC from the network terminal or modem of an optical network user are engaged.

According to the innovation, the optical box or rosette comprises a base 10 in the form of an elongated rectangular plate, in electrically non-conductive material, for example, a polymer, to be later seated and attached to a wall or any other support structure (not illustrated).

The base 10 has a first and a second end edges 11, 12, a pair of longitudinal edges 13, and a front face 10a incorporating, next to the first end edge 11 and generally in one piece, a jaw 20, shaped as a channel C with side walls 21 incorporating teeth 22 projecting radially into the longitudinal channel and inclined towards the second end edge 12 of the base 10. The jaw 20 is sized to receive and retain axially inside the same and through the teeth 22, a respective extension of a "drop" cable DC that can be defined by a "micro indoor - low friction" cable, a "drop" compact "low friction" cable, or further a 3 mm circular optical "drop" cable.

The construction of the jaw 20, provided with teeth 22 acting against the outer sheath of the "drop" cable inserted in said longitudinal channel C, allows the retention of these cables, in the jaw 20, to support greater axial tension loads, for example, of the order of 100 N for "micro indoor low friction" cables, "drop" compact "low friction" and 3 mm circular "drop" cables.

The front face 10a of the base 10 also incorporates, next to the second end edge 12 and generally in one piece, a stop 18, projecting upwards and provided with a median window 18a in the form of a "U", to allow the passage, with reduced clearance, of a portion of the optical cord OC projecting from the end plug EP outwards the termination box through the median window 18a.

In a median region of the longitudinal extension of the front face 10a of the base 10, a pair of lateral jaws 30 is incorporated, which are projecting upwards and elastically deformable, from an operative position, in which they lock the connection terminal CT against the front face 10a of the base 10, to an inoperative position, in which they release the connection terminal CT.

The optical box or rosette further comprises a cover 60, generally formed in electrically non-conductive material and having a front wall 61, end walls 62 opposite each other and longitudinal, side and opposite each other walls 63.

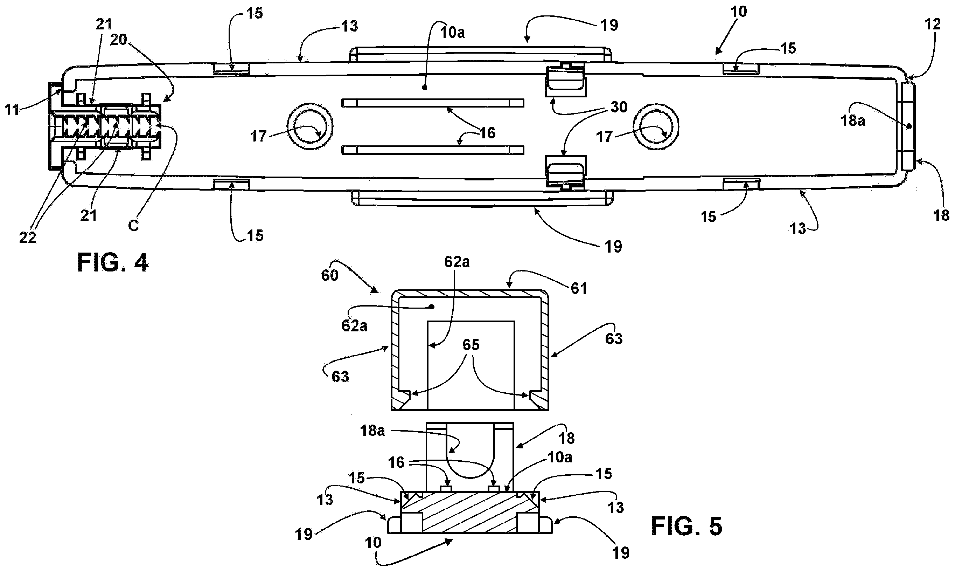

Each of the end walls 62 is provided with a window 62a, wherein, with the assembly of the cover 60 against the base 10, one of the windows 62a, illustrated only in Figure 5, starts to enclose a (end) portion of the jaw 20, while the other window 62a starts to enclose the stop 18 and its median window 18a, to allow the passage of the portion of the optical cord OC that projects from the end plug EP outwards the termination box through the respective window 62a of the cover 60.

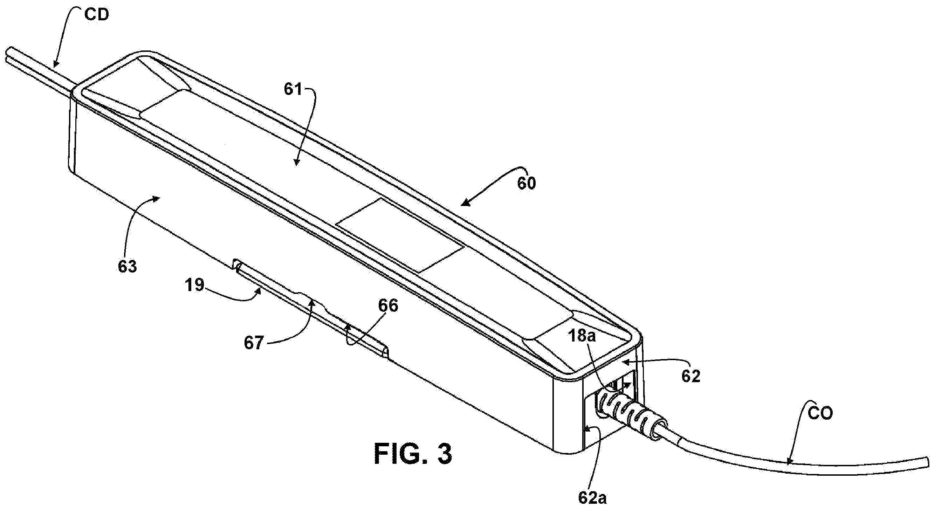

The cover 60 is constructed to have the rear edges of the end 62 and longitudinal 63 walls seated and releasably locked against the front face 10a of the base 10, as illustrated in Figures 3 and 5.

In order that the cover 60 can be releasably locked against the front face 10a of the base 10, the longitudinal edges 13 of the latter can be provided, each, for example, with a pair of locking tongues 15, incorporated in a single piece to the base 10 and longitudinally spaced from each other and recessed into the respective edge of the base 10, under each of which an shoulder 65 (figure 5) is fitted and retained and internally incorporated in each longitudinal wall 63 of the cover 60, as best illustrated in figure 5.

According to the illustrated construction, the windows 62a of the two end walls of the cover 60 are the same and have the same contour, open at a rear edge of said end walls 62 of the cover 60, to enclose the jaw 20 and the median window 18a of the stop 18. This arrangement allows the cover to be mounted in two opposite positions against the base 10, that is, in the most suitable position for reading its identifying inscriptions, regardless of the inversion in the position of attaching the base 10 to the support structure of the termination box or rosette.

Further, according to the illustrated configuration, the front face 10a of the base 10 can incorporate, in a median way, two ribs 16, parallel to each other, on which the end connector EC of the "drop" cable DC is seated and guided, when fitted in the connection terminal CT locked against front face 10a of base 10.

For attaching the base 10 to a wall or supporting structure, the base 10 can be made, for example, by providing two through holes 17, sized to receive the respective attachment screws not illustrated or even by using a double-sided adhesive tape, also not illustrated.

With the construction proposed herein, the base 10 is initially attached against the support structure. Then, the "drop" cable DC, already carrying the end connector EC, has the latter fitted to the facing end of the connection terminal CT and a portion of its extension fitted inside the longitudinal channel C of the jaw 20, so that the teeth 22 of the latter interfere with the outer sheath of the "drop" cable DC, ensuring robust axial retention of the cable in the box or rosette.

After the abovementioned box and cable assembly operations, the user can fit the end plug EP of its optical cord OC inside the other end of the connection terminal CT and accommodate the adjacent extension of the optical cord OC through the median window 18a of the stop 18.

Only after coupling the end plug EP to the connection terminal CT and the accommodation of the optical cord OC through the window 18a of the stop 18, the cover 60 can be seated and locked on the base 10, through the fitting of the shoulders 65, internal to the longitudinal walls 63 of the cover 60, under the locking tongues 15, incorporated in one piece into the base 10.

The drawing figures illustrate the base 10 incorporating, in the median region of each of its longitudinal edges 13, a longitudinal rib 19, extending for about 1/3 of the extension of the base 10 and defining a support shoulder for a tool (not illustrated) for opening the cover 60. The cover 60, in turn, presents the rear edge of each of the longitudinal walls 63 provided with a median cutout 66 (only one of which is illustrated), sized so that there can be housed in there the respective longitudinal rib 19 of the base 10. Each median cutout 66 is provided, in its median region, with a recess 67, dimensioned to define, with the facing longitudinal rib 19, an insertion window of a flat nose tool (not illustrated) between any of the longitudinal ribs 19 of the base 10 and the cover 60. Thus, the cover 60 can be easily detached from its fitting in the base 10, without risk of damage to the finishing of the termination box.

Although only one configuration of the termination box or optical rosette in question has been illustrated herein, it should be understood that changes in the shape and arrangement of the components may be made, without departing from the constructive concept defined in the claims accompanying the present specification.

## Claims

1. An optical termination box for indoor environments, housing and retaining a connection terminal (CT) to which an end connector (EC) of a "drop" cable (DC) and an end plug (EP) of a user's optical cord (OC) are coupled, **characterized in that** it comprises: a) an elongated base (10) having a first and a second end edges (11, 12), a pair of longitudinal edges (13), and a front face (10a) incorporating: next to the first end edge (11), a jaw (20), in the form of a longitudinal channel, with side walls (21) incorporating teeth (22), internal and inclined towards the second end edge (12), and axially receiving and retaining an extension of the "drop" cable (DC); next to the second end edge (12), a stop (18), projecting upwards and provided with a median window (18a) in a "U" shape, for the passage of the optical cord (OC); and, in a median region, a pair of lateral jaws (30), projecting upwards and elastically deformable, from an operative position to an inoperative position, in which they lock and release, respectively, the connection terminal (CT) in relation to the front face (10a) of the base (10); and b) a cover (60), having a front wall (61), end walls (62) provided with respective windows (62a) that surround, respectively, a portion of the jaw (20) and the median window (18a) of the stop (18), and longitudinal walls (63), opposite and having rear edges seated and releasably locked against the front face (10a) of the base (10).

2. The box according to claim 1, **characterized in that** the windows (62a), of the two end walls (62) of the cover (60), are the same and have the same contour, open at a rear edge of said walls ends (62) of the cover (60), to enclose the jaw (20) and the median window (18a) of the stop (18).

3. The box according to any one of claims 1 or 2, **characterized in that** the longitudinal edges (13) of the base (10) each incorporate a pair of locking tongues (15), longitudinally spaced from each other and recessed into the respective edge of the base (10), under each of which a shoulder (65) internally incorporated into each longitudinal wall (63) of the cover (60) is fitted and retained.

4. The box according to any one of claims 1 to 3, **characterized in that** the front face (10a) of the base (10) incorporates, in a median way, two ribs (16) parallel to each other, on which the end connector (EC) of the "drop" cable (DC) is seated and guided.

5. The box according to any one of claims 1 to 4, **characterized in that** the base (10) incorporates, in each of its longitudinal edges (13), a longitudinal rib (19) fitted inside a respective median cutout (66) of the rear edge of a respective longitudinal wall (63) of the cover (60) when mounted on the base (10), each median cutout (66) being provided, in its median region, with a recess (67) defining, with the facing longitudinal rib (19), an insertion window for a flat nose tool, between any of the longitudinal ribs (19) of the base (10) and the cover (60).
